Europäisches Patentamt

European Patent Office

Office européen des brevets

(19)

(11) EP 1 600 467 A1

(12) EUROPEAN PATENT APPLICATION
published in accordance with Art. 158(3) EPC

(43) Date of publication:
30.11.2005 Bulletin 2005/48

(51) Int Cl.⁷: **C08G 63/183**, C08G 63/78,
C08L 67/02

(21) Application number: 04716761.4

(22) Date of filing: 03.03.2004

(86) International application number:
PCT/JP2004/002615

(87) International publication number:
WO 2004/078823 (16.09.2004 Gazette 2004/38)

(84) Designated Contracting States:
AT BE BG CH CY CZ DE DK EE ES FI FR GB GR
HU IE IT LI LU MC NL PL PT RO SE SI SK TR
Designated Extension States:
AL LT LV MK

(30) Priority: 05.03.2003 JP 2003058654

(71) Applicant: Asahi Kasei Chemicals Corporation
Tokyo 100-8440 (JP)

(72) Inventors:
• FUJIMOTO, Katsuhiro
2340052 (JP)
• AZUMA, Yoichiro
8820863 (JP)

(74) Representative: Weber, Thomas et al
Deichmannhaus am Dom
Postfach 10 22 41
50462 Köln (DE)

(54) **POLY(TRIMETHYLENE TEREPHTHALATE) COMPOSITION AND PROCESS FOR PRODUCING THE SAME**

(57) A polytrimethylene terephthalate composition comprising polytrimethylene terephthalate, wherein said polytrimethylene terephthalate comprises 50 mol% or more of trimethylene terephthalate repeating units, wherein the composition satisfies the following requirements (A) to (C):

(A) b* value is -5 to 25, wherein the b* value is obtained after heating at 180°C for 20 hours under an air atmosphere;
(B) each of acrolein and allyl alcohol in a solution which has the composition dissolved in hexafluoroisopropanol is not more than 20 ppm/composition; and
(C) degree of crystallinity Xc thereof is 0-40%, wherein the degree of crystallinity Xc is represented by

$$Xc = \{\rho c \times (\rho s - \rho a)\}/(\rho s \times (\rho c - \rho a)\} \times 100(\%)$$

wherein

$\rho a$:    amorphous density = 1.300 g/cm³
$\rho c$:    crystal density = 1.431 g/cm³
$\rho s$:    density of composition(g/cm³).

EP 1 600 467 A1

**Description**

TECHNICAL FIELD

The present invention relates to a polytrimethylene terephthalate composition and a process for producing the same. More specifically, the present invention relates to a polytrimethylene terephthalate composition which is excellent in color tone and is able to give molded products of the same color tone even when it has been subjected to a melt forming process such as melt spinning and extrusion molding, and a process for producing the same.

BACKGROUND ART

Polytrimethylene terephthalate (hereinafter also abbreviated as "PTT"), provides a new era of fibers having both the characteristics similar to nylon fibers such as soft feeling resulting from low elastic modulus, outstanding elastic recovery properties and easy dyeability, and the characteristics similar to polyethylene terephthalate (hereinafter also abbreviated as "PET") such as wash and wear properties, dimensional stability, and resistance to yellowing. In views of these advantageous features, PTT is beginning to draw attention as a material usable as a carpet, clothing materials, etc. PTT is also expected to be an outstanding molding material utilizing the features such as low hygroscopicity and resistance to yellowing which are not attainable by nylon and easy moldability and good appearance which are not attainable by polybutylene terephthalate (hereinafter also abbreviated as "PBT").

In order to further expand the use of PTT in the future by taking advantage of these features, a polymer is demanded which gives fibers and molded products such as injection molded products and extrusion molded products having excellent whiteness and an even and uniform color tone. A method for commercially producing such a polymer in high productivity is also demanded.

Usually, PTT can be obtained by heating terephthalic acid (hereinafter also abbreviated as "TPA") or a lower alcohol diester of terephthalic acid such as dimethyl terephthalate (hereinafter also abbreviated as "DMT") with trimethylene glycol (hereinafter also abbreviated as "TMG") in the absence of or in the presence of a catalyst such as metal carboxylate and titanium alkoxide to carry out a transesterification reaction or a direct esterification reaction, thereby obtaining bis(3-hydroxypropyl) terephthalate (hereinafter also abbreviated as "BHPT"), and then heating and reacting the BHPT in the molten state in the presence of a catalyst such as titanium alkoxide and antimony oxide while removing by-product TMG from the system thereby performing a polycondensation reaction.

In order to obtain fibers and molded articles having excellent whiteness and an even and uniform color tone, it is necessary to improve the whiteness and homogeneity of polymer and control coloration which normally result from steps involving heating such as drying and melting. However, PTT has a problem of being easily colored when subjected to heat-treatment such as drying and crystallization or a melt forming process when compared to polyesters such as PET and PBT. Usually, PET has little coloration when dried at high temperatures, on the order of 180°C, or when subjected to a melt forming process, while PTT is easily colored turning yellowish. Although the cause thereof is not well understood, it is supposed to be attributable to the properties intrinsic to PTT, i.e., PTT tends to be decomposed in heat and that functional groups in the compound or polymer resulting from the heat decomposition tend to cause coloration.

Moreover, in order to improve productivity and to suppress unevenness in whiteness, it is desirable to perform the so-called "continuous polymerization" wherein materials are continuously supplied to the reactor, subjected to polymerization in the molten state and continuously taken out.

As a technique to continuously carry out the polymerization of PTT, there has been proposed a process wherein the temperature of the heat medium for heating is limited to 300°C or lower, preferably 290°C or lower so as to control the wall temperature of the polymerization reactor thereby suppressing heat decomposition. For example, see patent reference 1 indicated below.

Moreover, there has been proposed a technique in the continuous polymerization process using two or more reactors wherein each of the reactors is set at a proper temperature and a proper residence time to reduce acrolein and similar by-products, and obtain a polymer of increased molecular weight. For example, see patent references 2 and 3 indicated below.

According to the research of the present inventors, however, even though the application of the above-mentioned technique may suppress heat decomposition thereby enabling the molecular weight to increase and the amounts of generated acrolein and the like to decrease, it is difficult to obtain a polymer which becomes hardly colored when it has been subjected to melt forming process.

As another approach for suppressing coloration of the polymer, improvements have been also attempted with a heat stabilizer. For example, see patent reference 4 indicated below.

However, if polymerization is performed using a heat stabilizer, etc., although it is certainly possible to obtain a polymer having a good color tone, coloration by a melt forming process or heat treatment at a high temperature cannot be suppressed and to the contrary, the heat stabilizer itself causes coloration, and the color tone of the obtained molded product is impaired.

In addition, there has been also proposed a technique for obtaining a polymer with little yellowness by using a tin catalyst as a polycondensation catalyst and adding a pigment thereto. For example, see patent reference 5 indicated below.

Moreover, there has been also proposed a technique for obtaining a polymer excellent in heat stability and good in color tone by using as a polycondensation catalyst a special titanium catalyst having a particular configuration with respect to the neighboring atoms. For example, see patent references 6 and 7 indicated below.

According to our research, however, since tin catalysts are high in activity, they also promote the decomposition of the generated polymer while promoting polymerization. For this reason, the polymer readily causes coloration, and therefore a pigment is needed to suppress and conceal this coloration. Therefore, even if a polymer with a good color tone is obtained, the color tone will deteriorate when it has been subjected to steps involving heat such as drying or in a melt forming process. Moreover, when a special titanium catalyst is used, the polymer is less yellowish but becomes more darkish and the obtained molded product therefrom does not have a very good color tone.

In addition, a technique has been also proposed wherein after performing melt polymerization, solid polymerization is also conducted. For example, see patent reference 8 indicated below.

In this technique, since the pellets are heated at a high temperature for a long time, the polymer is highly crystallized. Consequently, a powdery polymer is generated in a large amount during polymerization and transportation of polymer pellets, or a non-molten portion is generated at the time of molding. Each of these becomes defects in a molded product when a fiber, a film and a bottle are molded therefrom. Moreover, since the polymerization is carried out in the form of pellets, it is very difficult to make uniform the degree of polymerization, color tone and coloration properties during heating. Furthermore, since it is necessary to once perform solidification and crystallization after carrying out melt polymerization and to perform polymerization in the solid phase for a long time, a large-scale equipment is needed and productivity will also be impaired.

Thus, the conventional PTT manufacturing process cannot provide an excellent polymer which gives molded products having excellent color tone and can be industrially produced by the continuation melt polymerization which is advantageous in productivity. Moreover, since it is a phenomenon peculiar to PTT that coloration tends to occur by its heat history, polymers for obtaining molded products having excellent color tone cannot be obtained even if a technique for producing polyesters such as PET and PBT is simply applied.

Patent reference 1: U.S. Patent No. 6277947
Patent reference 2: WO2000/158980
Patent reference 3: WO2000/158981
Patent reference 4: WO98/23662
Patent reference 5: JP-A-05-262862
Patent reference 6: JP-A-2000-159875
Patent reference 7: JP-A-2000-159876
Patent reference 8: U.S. Patent No. 6403762

DISCLOSURE OF THE INVENTION

An object of the present invention is to provide a polymer composition for obtaining fibers and molded products having excellent whiteness and even and uniform color tone by a melt forming process including drying and melting at a high temperature, and a process for producing the polymer composition industrially in high productivity.

The present inventors conducted intensive studies and as a result, surprisingly found that when the average residence time in the piping and equipment after increasing the degree of polymerization under reduced pressure or under an inert gas flow and before cooling the polymer composition and the inner wall temperature of the equipment are set in suitable ranges, a PTT composition which is able to provide molded products having excellent color tone and always giving the same color tone even when it has been subjected to a melt forming process can be produced industrially in high productivity. Thus, the present invention was completed.

That is, the present invention is as follows:

(I) A polytrimethylene terephthalate composition comprising polytrimethylene terephthalate, wherein said polytrimethylene terephthalate comprises 50 mol% or more of trimethylene terephthalate repeating units, wherein said composition satisfies the following requirements (A) - (C):

(A) b* value is -5 to 25, wherein the b* value is obtained after heating at 180°C for 20 hours under an air atmosphere;

(B) each of acrolein and allyl alcohol in a solution which has said composition dissolved in hexafluoroisopropanol is not more than 20 ppm/composition; and

(C) degree of crystallinity Xc thereof is 0 to 40%, wherein the degree of crystallinity Xc is represented by

$$Xc = \{\rho c \times (\rho s - \rho a)\}/(\rho s \times (\rho c - \rho a)\} \times 100(\%)$$

wherein

$\rho a$:    amorphous density = 1.300 $g/cm^3$

$\rho c$:    crystal density = 1.431 $g/cm^3$

$\rho s$:    density of composition ($g/cm^3$).

(II) The PTT composition of the above (I) wherein its intrinsic viscosity [η] is 0.4 to 3.0 dl/g.

(III) A pellet comprising the composition of (I) or (II).

(IV) A molded product comprising the composition of the above (I) or (II) wherein the b* value is -5 to 25.

(V) A process for producing a polytrimethylene terephthalate composition comprising continuously polymerizing polytrimethylene terephthalate in a molten state using one or more reactors, wherein average residence time after the molten polymer leaves the last polymerization reactor and before it is cooled and solidified is 0.01 to 50 minutes, and an inner wall temperature of piping and/or equipment with which the polymer contacts during the residence time is 290°C or less.

(VI) The process of the above (V) wherein the carboxyl end group concentration of the polymer which increases after leaving the last polymerization reactor and before cooling and solidification thereof is in a range of 0 to 30 meq/kg.

BRIEF DESCRIPTION OF THE DRAWINGS

FIG. 1 is a schematic view showing the outline of a polymerization reactor according to the present invention which performs polymerization from materials; and

FIG. 2 is a schematic view showing the outline of a polymerization reactor according to the present invention which performs polymerization from a polymer having a low degree of polymerization.

BEST MODE FOR CARRYING OUT THE INVENTION

The present invention will be described in detail below.

PTT of the present invention is a PTT comprising 50 mol% or more of trimethylene terephthalate repeating units. PTT as used herein refers to a polyester formed from terephthalic acid as the acid moiety and trimethylene glycol (also referred to as 1,3-propanediol and also abbreviated as "TMG" hereinafter) as the diol moiety. PTT may contain one or more kinds of other copolymerization components in an amount of not more than 50 mol%. The copolymerization components to be contained include ester-forming monomers such as sodium 5-sulfoisophthalate, potassium 5-sulfoisophthalate, 3,5-dicarboxylic acid benzene sulfonic acid tetrabutyl phosphonium salt, 3,5-dicarboxylic acid benzene sulfonic acid tributylmethyl phosphonium salt, 1,4-butanediol, neopentyl glycol, 1,6-hexamethylene glycol, 1,4-cyclohexanediol, 1,4-cyclohexanedimethanol, adipic acid, dodecanedioic acid, 1,4-cyclohexanedicarboxylic acid. In order to enhance the features of PTT such as elastic recovery properties, wash and wear properties, size stability for fibers and easy moldability and good appearance of the molded article, the trimethylene terephthalate repeating units are preferably contained in an amount of not less than 70 mol%, more preferably not less than 80 mol% and especially preferably not less than 90 mol%.

The term "PTT composition" in the present invention refers not only to simply PTT by itself in which the amount of each of acrolein and allyl alcohol in the above requirement (B) is 0 ppm, but also encompasses any PTT composition containing acrolein and allyl alcohol as well as any PTT composition containing a cyclic or linear oligomer, a monomer such as DMT, TPA and TMG, and various additives, in addition to the above-mentioned PTT by itself or as part of a composition.

In the PTT composition of the present invention, b* value should be -5 to 25, and b* value after heating at 180°C for 20 hours under an air atmosphere should be -5 to 25.

Research of the present inventors has revealed that not only excellent whiteness of the PTT composition used for molding but also resistance to coloration during the heating of the PTT composition such as drying or melt forming at a high temperature is important in order to improve the whiteness of the molded products. Although the cause thereof is not well understood, it is supposed that the coloration is attributable not only to decomposition of the polymer itself during the heating, but also to certain color-causing substances or functional groups contained in the PTT composition. As an index of the coloration tendency at the time of heating, the color tone after heating a PTT composition at 180°C for 20 hours under an air atmosphere can be used. Therefore, in the present invention, it is possible to obtain molded products excellent in whiteness by limiting the b* value of the composition and the b* value after heating of the composition in the ranges described above, respectively. The b* value is preferably from -4 to 21, more preferably from -3 to 18, even more preferably from -2 to 16, and most preferably 0.

In order to allow the obtained molded product to easily exhibit the desired color using a dye or a pigment without making the product blackish, it is preferable that the L value of the composition and the L value after subjecting the composition to heat-treating as mentioned above are preferably 70 or more, more preferably 75 or more, and most preferably 80 or more. Although the upper limit of the L value does not exist particularly, it is usually 100 or less.

Furthermore, in the present invention, each of acrolein and allyl alcohol in the solution wherein the composition is dissolved in hexafluoroisopropanol should not be more than 20 ppm/composition. It is possible to improve the whiteness of the obtained molded products by setting these conditions. There is a considerable correlation between the amounts of these substances and the coloration during heating. Although the cause is not certain, this is possibly because these substances are the coloration-causing substances themselves or substances which increase or decrease similarly with the color-causing substances. Moreover, it is very preferable in the production of molded products to reduce the content of these substances in the composition and suppressing the emission thereof from the composition, since the above-mentioned substances worsen the working environment. The content of each of acrolein and allyl alcohol is preferably not more than 15 ppm/composition, more preferably not more than 10 ppm/composition, even more preferably not more than 5 ppm/composition and naturally most preferably 0 ppm/composition.

In the present invention, the degree of crystallinity Xc of the PTT composition needs to be 0-40%.

The degree of crystallinity Xc as used herein is represented by

$$Xc = \{\rho c \times (\rho s - \rho a)\}/(\rho s \times (\rho c - \rho a)\} \times 100(\%)$$

wherein

$\rho a$:  amorphous density = 1.300 g/cm$^3$

$\rho c$:  crystal density = 1.431 g/cm$^3$

$\rho s$:  density of composition (g/cm$^3$).

By limiting the degree of crystallinity in this way, the composition can be prevented from becoming brittle, and the problem peculiar to PTT that powdered polymer is generated during transfer of polymer pellets with a pneumer or feeder (this problem does not occur in other polymers such as PET and PBT) can be suppressed. The degree of crystallinity is more preferably 0 to 35%, and still more preferably 0 to 30%.

Although the degree of crystallinity as used herein is the average value in one grain of pellet, it is preferable that the degree of crystallinity falls in the above-mentioned range in all portions when the pellet is cut and divided into a surface layer and the core part. Moreover, the difference in the degree of crystallinity between the surface and the core part is preferably 40% or less, more preferably 30% or less and most preferably 20% or less.

As for the PTT composition of the present invention, it is preferable that the intrinsic viscosity [η] is in a range of 0.4 to 3.0 dl/g. Taking it into consideration that a fiber and a molded article with practical strength is desired, the intrinsic viscosity is preferably 0.4 dl/g or more. Taking into consideration the difficulty of the melt forming process due to the increase in the molten viscosity, the intrinsic viscosity is preferably 3.0 dl/g or less. The intrinsic viscosity [η] is more preferably in a range of 0.5 to 2.5 dl/g, most preferably in a range of 0.6 to 2.0 dl/g.

Moreover, in order to make the product resistant to hydrolyzation even if it is molded while insufficiently dry, or to improve the weather-proof properties of the molded product, it is preferable to limit the carboxyl end group concentration to be not more than 50 meq/kg composition. The carboxyl end group concentration is preferably not more than 30 meq/kg composition, more preferably not more than 20 meq/kg composition and most preferably not more than 10 meq/kg composition. The lower the carboxyl end group concentration is, the better.

Although the shape of the PTT composition of the present invention is usually a pellet, it may be a powder depending on the application. Moreover, after polymerization, the PTT composition may be shaped directly to a fiber, a film, a molded article and its intermediates. When pellets are made of the PTT composition, they preferably have an average weight in a range of 1 to 1000 mg/piece. The pellets of this average weight are advantageous in uniform extrusion in a molding machine, transportation and drying of the pellets, handling at the time of spinning, and speedy drying. The average weight is more preferably in a range of 5 to 500 mg/piece, and most preferably in a range of 10 to 200 mg/piece. Although any of a globular form, a rectangular parallelepiped form, a cylinder form and a cone form can be used as the shape of a pellet, considering handling properties, it is preferable to limit the length of the longest part to 15 mm or less, more preferably to 10 mm or less, and most preferably to 5 mm or less.

Next, the process for producing the PTT composition of the present invention will be described.

Usually, PTT can be obtained by heating terephthalic acid or a lower alcohol diester of terephthalic acid such as DMT with TMG in the absence of or in the presence of a catalyst such as metal carboxylate and titanium alkoxide in a transesterification reaction or in a direct esterification reaction, thereby obtaining BHPT, and then heating and reacting the BHPT in the molten state in the presence of a catalyst such as titanium alkoxide, while removing by-product TMG from the system, thereby performing a polycondensation reaction.

The process for polymerization according to the present invention includes the above-mentioned polymerization process from the raw materials and in addition, a process by heating and reacting an intermediate such as BHPT or a polymer of low polymerization degree in the molten state in the presence of a catalyst such as titanium alkoxide, while removing by-product TMG from the system thereby performing polycondensation reaction to obtain the polymer.

It is important that the process of the present invention is the so-called continuous polymerization wherein materials, an intermediate and a polymer of low polymerization degree are continuously supplied to the reactor and the thus polymerized product is continuously taken out. The use of the continuous polymerization enables the suppression of unevenness in the quality of the obtained polymer.

Although the number of the reactors used in the present invention is one or more, three or more are preferable when performing polymerization from TMG and a lower alcohol diester of terephthalic acid or TPA as starting materials, and two or more are preferable when performing polymerization from BHPT or a polymer of extremely low polymerization degree.

The thus polymerized product is taken out from the last polymerization reactor by a gear pump or an extruder, ejected through piping etc. from a spinning orifice into a gas such as air and nitrogen thereby effecting cooling and solidification in the gas as it is, or alternatively it is cooled and solidified by contacting it with a liquid such as water or a solid such as metal. In order to use a polymer for molding, it is preferable to make the polymer contact with a liquid such as water for cooling and solidification.

As described above, in order to obtain molded products excellent in whiteness, not only excellent whiteness of the PTT composition but also resistance to coloration during the heating of the PTT composition such as drying or melt forming at a high temperature is preferable. For this reason it is supposed that reducing certain color-causing substances or functional groups contained in the polymer is desired. It is supposed that these color-causing substances or functional groups are generated by heat decomposition. Since they are taken out of the system with TMG generated by the polymerization reaction even if they are formed more or less within a polymerization reactor, they are supposed to hardly remain in the polymer. However, since they are not taken out of the system when in a closed space such as piping and equipment after leaving the polymerization reactor, they will accumulate in the polymer, and if the polymer in a closed space is heated in the molten state for a long time, it will cause significant coloration.

Therefore, in order to suppress the coloration during the heating, it is considered to be very important to control the average residence time after leaving the last polymerization reactor and before cooling and solidification and the inner wall temperature of the piping and/or equipment which are contacted during this step, thereby suppressing heat decomposition to lessen the color-causing substances or functional groups in the polymer.

"Equipment" as used herein refers to any equipment in the path along which the polymer passes from the outlet of the last polymerization reactor to the step of ejection into the gas and includes, for example, a kneader for kneading an additive, a filter apparatus, a gear pump for transfering the polymer out of the polymerization reactor and uniaxial or biaxial extruder. "Piping" refers to piping connecting the last polymerization reactors with these equipment, spinning orifice, etc. When there is a zone where the degree of polymerization does not increase within the last polymerization reactor, such a zone is also encompassed by this term.

According to the production process of the present invention, the average residence time after the polymer leaves the last polymerization reactor and before it is cooled and solidified is 0.01 to 50 minutes. The average residence time is preferably not more than 50 minutes, taking coloration of the polymer during heating into consideration. Although shorter average residence time is better, it is practically 0.01 minutes or more. The average residence time is preferably 0.02 to 40 minutes, more preferably 0.03 to 30 minutes, and most preferably 0.04 to 20 minutes. It is also preferable to make the so-called dead space as small as possible where the polymer stays for a long time in the piping and the path in the equipment along which the polymer passes.

When the average residence time can be actually measured, it is preferred to make the value fall in the above-mentioned range, and if it cannot be actually measured, it is preferred to make the value obtained by dividing the average residence amount within the above mentioned piping and/or of equipment by the ejecting amount per unit time fall in the above-mentioned range.

In the meantime, the inner wall temperature of piping and/or equipment with which the polymer contacts after leaving the last polymerization reactor and before cooling and solidification should be 290°C or less. When the decrease in the degree of polymerization due to heat decomposition and coloration of the polymer during heating are taken into consideration, 290°C or less is preferable. On the other hand, when the increase in the viscosity of the polymer due to a decrease in temperature and the difficulty in taking out the solidified product are taken into consideration, a temperature of 220°C or more is preferable. The temperature is preferably 225 to 280°C, more preferably 230 to 275°C, and most preferably 235 to 270°C.

The inner wall temperature of piping and/or equipment with which the polymer contacts is preferably as uniform as possible. It is preferable to heat the inner wall with a liquid controlled within the above-mentioned temperature range so that even a part thereof may not go out of the above-mentioned temperature range. When using a heater etc., it is preferable to control the temperature on the surface of the heater within the above-mentioned temperature range.

The last polymerization reactor in the present invention refers to all the reactors that can raise the degree of polymerization such as a vertical agitation type reactor, a horizontal agitation type reactor with uniaxial or biaxial agitating elements, a reactor capable of polymerization by allowing the polymer to flow along a supporting member, a gravity-flow type thin film polymerization reactor having shelves, a thin film polymerization reactor allowing gravity flow of the polymer on an inclined plane, and a biaxial extruder type reactor. Among these, the horizontal agitation type reactor with uniaxial or biaxial agitation elements and a reactor capable of polymerization by allowing the polymer to flow along a supporting member are preferable in order to obtain a polymer having a high degree of polymerization so as to give molded products having outstanding strength.

Polymerization in such a last polymerization reactor is performed under reduced pressure or while circulating an inert gas. In order to reduce the color-causing substances or functional groups in the polymer, it is preferable to perform polymerization under reduced pressure. The average residence time within the last polymerization reactor is preferably not more than 5 hours, more preferably not more than 4 hours, and most preferably not more than 3 hours.

Moreover, in the present invention, it is preferable that the carboxyl end group concentration of the polymer which increases after leaving the last polymerization reactor and before cooling and solidification should be in a range of 0 to 30 meq/kg. Although it is considered that the carboxyl end group of the polymer does not directly cause coloration, its amount serves as an index of the amount of the color-causing substances or functional groups. The increased carboxyl end group concentration of the polymer means that many color-causing substances or functional groups exist and tend to cause the coloration of the obtained molded article. The carboxyl end group concentration of the polymer is preferably 0 to 20 meq/kg, more preferably 0 to 15 meq/kg, and most preferably 0 to 10 meq/kg. It should be as low as possible. It is also advantageous for the same reason that the carboxyl end group concentration of the polymer leaving the last polymerization reactor is also smaller, and is preferably 0 to 40 meq/kg, more preferably 0 to 20 meq/kg, and most preferably 0 to 10 meq/kg.

Next, one example of the process of the present invention for producing a PTT composition by polymerization from starting materials is illustrated, but the present invention is not limited to this process.

The PTT manufacturing process is roughly divided by the difference in starting materials into a process in which a transesterification reaction between a lower alcohol diester of terephthalic acid and TMG is carried out and after obtaining BHPT which is the intermediate of PTT, polycondensation reaction of the BHPT is performed to produce a PTT prepolymer (also abbreviated as "transesterification process" hereinafter), and a process in which an esterification reaction between terephthalic acid and TMG is carried out and after obtaining BHPT, polycondensation reaction of the BHPT is performed similarly as in the first process to produce a PTT prepolymer (also abbreviated as "direct esterification process" hereinafter). The term "BHPT" as used herein includes the above-mentioned bis (3-hydroxypropyl terephthalate) itself and also those containing terephthalic acid, a lower alcoholic ester of terephthalic acid, TMG and a PTT oligomer.

In the transesterification process, BHPT is obtained by exchanging the esters of DMT and TMG which are types of lower alcohol diesters of terephthalic acid at a temperature of 150 to 240°C in the presence of a transesterification catalyst. The molar ratio of a lower alcohol diester of terephthalic acid and TMG at the time of feeding is preferably 1:1.3 to 1:4, more preferably 1:1.5-1:2.5. When the length of the reaction time is taken into consideration, TMG in an amount more than 1:1.3 is preferable. On the other hand when the length of the polymerization time for volatilizing TMG which does not participate in the reaction is taken into consideration, TMG in an amount less than 1:4 is preferable.

It is necessary to use a transesterification catalyst in the transesterification process. Preferable examples thereof include a titanium alkoxide represented by for example, titanium tetrabutoxide and titanium tetraisopropoxide, cobalt acetate, calcium acetate, zinc acetate, etc. Among these, titanium tetrabutoxide is preferable since it also works as a catalyst in the subsequent polycondensation reaction. The amount of a transesterification catalyst is preferably 0.02 to 1 wt%, more preferably 0.05 to 0.5 wt%, and still more preferably 0.08 to 0.2 wt% based on the terephthalic acid diester.

In the direct esterification process, terephthalic acid and TMG are subjected to esterification reaction at a temperature of 150 to 240°C to obtain BHPT. The molar ratio of terephthalic acid and TMG at the time of feeding them is preferably 1:1.05 to 1:3, more preferably 1:1.1 to 1:2. When the length of the reaction time and the coloration are taken into consideration, it is preferable that TMG in an amount more than 1:1.05 is used. When the polymerization time for volatilizing TMG which does not participate in the reaction is taken into consideration, TMG in an amount less than 1:3 is preferable.

Although an esterification catalyst is not necessarily required in the direct esterification process since the proton isolated from terephthalic acid works as a catalyst, it is preferable to use an esterification catalyst in order to enhance the reaction rate. Preferable examples of the catalyst include a titanium alkoxide represented by for example, titanium tetrabutoxide and titanium tetraisopropoxide, etc. The amount of the catalyst to be added is preferably 0.02 to 1 wt%, more preferably 0.05-0.5 wt%, and still more preferably 0.08-0.2 wt% based on terephthalic acid to be used.

BHPT obtained by the above-mentioned process is subsequently subjected to polycondensation to form a polymer.

Polycondensation is conducted by reacting BHPT at a predetermined temperature under reduced pressure or in an inert gas atmosphere while removing the by-product TMG. The temperature at which polycondensation is performed is preferably 230 to 280°C. When solidification of a reaction product and the length of the reaction time are taken into consideration, the temperature is preferably 230°C or more. On the other hand, when heat decomposition and the color tone of the polymer are taken into consideration, the temperature is preferably 280°C or less. The temperature is more preferably 232 to 275°C, and still more preferably 235 to 270°C.

The polycondensation reaction can be performed under reduced pressure or in an inert gas atmosphere. When using reduced pressure, the degree of reduced pressure is suitably adjusted to a sublimation state and reaction rate of BHPT or the polycondensation reaction product. When performing a polycondensation reaction under an inert gas atmosphere, it is important to adequately substitute the inert gas at any time so that by-product TMG can be removed efficiently. It is preferable to perform a polycondensation reaction under reduced pressure in the present invention.

It is preferable to use a polycondensation catalyst for effecting the polycondensation of BHPT. The polycondensation time will become long if no polycondensation catalyst is used. Preferable examples of the polycondensation catalyst include a titanium alkoxide represented by for example, titanium tetrabutoxide and titanium tetraisopropoxide, titanium dioxide or a complex salt of titanium dioxide and silicon dioxide, antimony compounds such as diantimony trioxide and antimony acetate, tin compounds such as tin 2-ethylhexanoate, butylstannic acid, and butyltin tris (2-ethylhexanoate), etc. Titanium tetrabutoxide and tin 2-ethylhexanoate are preferable from the viewpoint that they can provide a high reaction rate and a good color tone. These catalysts may be used alone or two or more of them may be used in combination. The polycondensation catalyst is preferably added in an amount of 0.001 to 1 wt%, more preferably 0.005-0.5 wt%, and most preferably 0.01 to 0.2 wt% based on the weight of the polymer obtained. When a compound used in the process for obtaining BHPT acts also as a polycondensation catalyst, the amount of a polycondensation catalyst to be added may be adjusted so that the total amount including the amount of that compound may fall within the above range.

When performing polymerization of BHPT by the continuous polymerization process, it is preferable to separately perform the polycondensation reaction in two or more reactors with varied temperature, degree of reduced pressure, etc. in order to proceed with the reaction efficiently.

PTT obtained by polymerization can be formed in the shape of pellets (it is also called tips). After it is subjected to the process of crystallization and drying, it can be used for molding. The pellets can be obtained by extruding the molten polymer in the shape of a strand or a sheet, cooling and solidifying it and then cutting it. In this case, it is necessary to suitably select the cooling temperature and the time in which it is cooled so that the degree of crystallinity Xc may fall within the range of the present invention. Usually, the molten polymer is extruded in the shape of a strand or a sheet, and promptly put into a coolant such as water to be cooled and then cut. The temperature of the coolant is preferably 20°C or less, more preferably 15°C, and still more preferably 10°C or less. When economical efficiency and handling properties are considered, water is preferable as a coolant and for this reason, the coolant temperature is preferable 0°C or more. Cutting for forming pellets is preferably performed after carrying out the cooling and solidification at a temperature of 55°C or less within 120 seconds after extruding the polymer.

According to the present invention, the molten polymer can be also introduced directly into a spinning machine or an extrusion molding machine, without being formed in the shape of pellets, and then cooled and solidified to obtain a molded product. The present invention encompasses such a case. In this case the average residence time after leaving the last polymerization reactor and before cooling and solidification should be also 0.01 to 50 minutes and the inner wall temperature of piping and/or equipment which comes in contact with the polymer should be 290°C or less.

In the present invention, various kinds of additives, for example, delustering agents, heat stabilizing agents, flame retardants, antistatic agents, defoaming agents, orthochromatic agents, antioxidants, ultraviolet-ray absorbers, nucleating agents, brighteners and the like can be copolymerized or blended. These additives can be put in at any stage of polymerization.

A heat stabilizer is preferably added in the present invention so as to improve the whiteness of the molded products to be obtained. As heat stabilizer in this case, pentavalent and/or trivalent phosphorus compounds and hindered phenol based compounds are preferable.

Examples of pentavalent and/or trivalent phosphorus compounds include trimethylphosphate, triethylphosphate, tributylphosphate, triphenylphosphate, trimethylphosphite, triethylphosphite, tributylphosphite, triphenylphosphite, phosphoric acid and phosphorus acid, etc., and especially trimethylphbsphite is preferable. It is preferable that the amount of a phosphorus compound to be added is 2 to 250 ppm as a weight ratio of phosphorus element contained in the PTT composition. In order to fully take advantage of the effect, the amount is preferably 2 ppm or more. Taking into consideration the case where the polycondensation catalyst is deactivated and polycondensation reaction rate decreases, so that the degree of polymerization does not reach the desired level, the amount is preferably 250 ppm or less. The amount of the phosphorus compound is more preferably 5 to 150 ppm and still more preferably 10 to 100 ppm as a weight ratio of the phosphorus element contained in the PTT composition.

A hindered phenol based compound is a phenol based derivative which has a substituent group in the position adjacent to the phenolic hydroxyl group to sterically hinder the hydroxyl group and has one or more ester linkages in the molecule. Specific examples thereof include pentaerythritol tetrakis(3-(3,5-di-tert-butyl-4-hydroxyphenyl) propionate), 1,1,3-tris(2-methyl-4-hydroxy-5-tert-butylphenyl)butane, 1,3,5-trimethyl-2,4-6-tris(3,5-di-tert-butyl-4-hydroxybenzyl)benzene, 3,9-bis(2-(3-(3-tert-butyl-4-hydroxy-5-methylphenyl)propionyloxy)-1,1-dimethylethyl)-2,4,8,10-tetraoxaspiro[5,5]undecane, 1,3,5-tris(4-tert-butyl-3-hydroxy-2,6-dimethylbenzene)isophthalic acid, triethylglycol bis (3-(3-tert-butyl-5-methyl-4-hydroxyphenyl)propionate), 1,6-hexanediol bis(3-(3,5-di-tert-butyl-4-hydroxyphenyl)propionate), 2,2-thio-diethylene-bis(3-(3,5-di-tert-butyl-4-hydroxyphenyl)propionate) and octadecyl-3-(3,5-di-tert-butyl-4-hydroxyphenyl)propionate). The amount of the hindered phenol based compound to be added is preferably 0.001 to 1 wt%, more preferably 0.005-0.5 wt% and still more preferably 0.01-0.1 wt% based on the polymer obtained.

Needless to say, combinational use of two or more of these heat stabilizers is also preferable.

Hereafter, the present invention will be described by way of examples in more detail but the present invention should not be considered to be limited to these examples.

The main measured values in the examples were measured by the following methods.

(1) Color tone (L value, b* value)

These values were measured using the color computer manufactured by SUGA Test instruments Co., Ltd.

The polymer was heated at 180°C for 20 hours under an air atmosphere, the color tone was also measured similarly to the above and it was made as the index for coloration at the time of heating.

(2) Acrolein and allyl alcohol contents

One gram of a sample was finely cut, put into 10 ml of hexafluoroisopropanol, and dissolved by subjecting to an ultrasonic wave treatment. Ten milliliters of water was added to this solution to reprecipitate the polymer components. Acrolein and allyl alcohol contained in the supernatant liquid were analyzed under the following conditions using gas-chromatograph/mass-spectrometer.

Column: VOCOL (60 m × 0.25 mm$\phi$ × film thickness 1.5 $\mu$m)

Temperature conditions: 35 to 100°C (elevated at a rate of 5°C/min), subsequently 100 to 220°C (elevated at a rate of 20°C/min)

Temperature at Injection Point: 220°C

Injection Method: Split method (split ratio = 1:30) and 1 $\mu$L injected

Measuring method: SIM method

(3) Degree of Crystallinity:

Degree of crystallinity was calculated according to the following equation from the density obtained by using the density slope pipe which was prepared with carbon tetrachloride and n-heptane based on JIS-L-1013.

$$Xc = \{\rho c \times (\rho s - \rho a)\}/(\rho s \times (\rho c - \rho a)\} \times 100(\%)$$

wherein

$\rho a$:    amorphous density(g/cm$^3$) = 1.300 g/cm$^3$

$\rho c$:    crystal density(g/cm$^3$) = 1.431 g/cm$^3$

ρs:    density of composition (g/cm$^3$).

(4) Intrinsic viscosity [η]

Intrinsic viscosity [η] was obtained by using an Ostwald viscometer and extrapolating the ratio ηsp/C of specific viscosity ηsp in o-chlorophenol at 35°C from concentration C (g/100 ml) to concentration zero and calculating according to the following formula.

$$[\eta] = \lim_{C \to O} (\eta sp/C)$$

(5) Carboxyl end group concentration

After dissolving 1 g of a polymer in 25 ml of benzyl alcohol and then adding 25 ml of chloroform thereto, the solution was titrated with a 1/50N potassium hydroxide benzyl alcohol solution, and the concentration was determined according to the following equation from the titrated value VA (ml) and the blank value V0 where there is no polymer contained.

Carboxyl end group concentration

$$(meq/kg) = (VA - V0) \times 20$$

Example 1

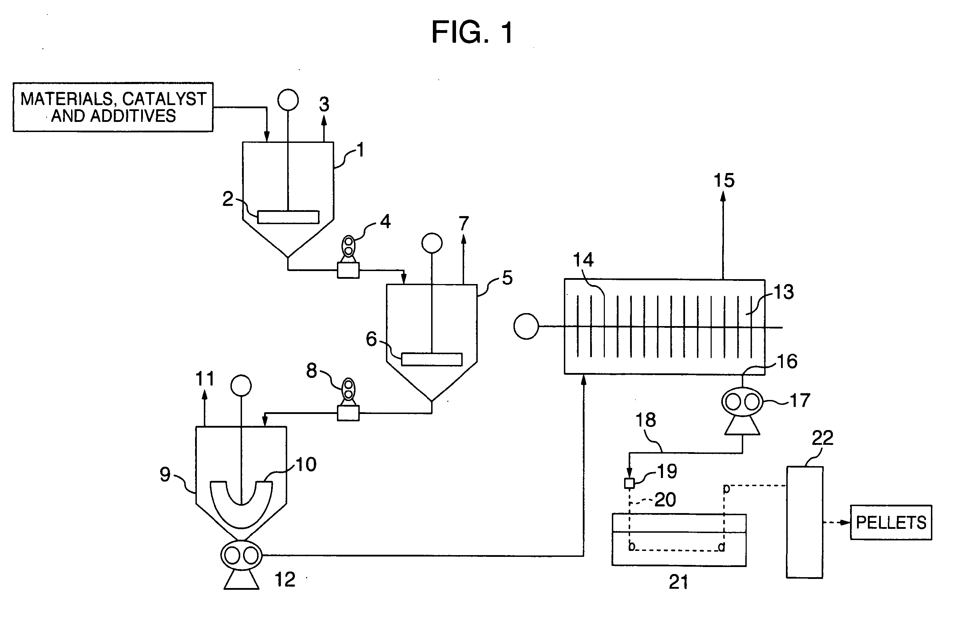

One thousand kilograms per day of PTT polymer was produced by polymerization using DMT and TMG as starting materials by the continuous polymerization process with the equipment of FIG. 1. The first transesterification reactor 1 and the second transesterification reactor 5 were vertical type agitation reactors with a vent-port 3 or 7 and a helical agitating element 2 or 6 in the shape of a turbine. A vertical type agitation reactor with a vent-port 11 and an anchor-like agitating element 10 is used for the first polycondensation reactor 9 and a horizontal type agitation reactor with a vent-port 15 and a uniaxial disk-like agitating element 14 was used for the second polycondensation reactor (the last polymerization reactor) 13.

Polymerization was performed by continuously supplying 0.1 wt% of titanium tetrabutoxide to DMT, TMG and DMT of the molar ratio of 1:1.5 at first into the first transesterification reactor and stirring them with agitating element 2 at normal atmosphere at 190°C and performing transesterification reaction while removing by-product methanol from vent-port 3. The reaction fluid was then transferred to the second transesterification reactor 5 with the transfer pump 4, and the transesterification reaction was similarly performed and completed at normal atmosphere at 230°C.

Then the reaction fluid was transferred to the first polycondensation reactor 9 with the transfer pump 8, and was stirred by the agitating element 10 under reduced pressure (3000 Pa) at 250°C to perform polycondensation while removing by-product TMG and the like from vent-port 11, and the polymer of low polymerization degree was obtained. Subsequently, the reaction fluid was transferred to the second polycondensation reactor 13 with the transfer pump 12, and polycondensation was similarly performed under reduced pressure (100 Pa) at 260°C to increase the degree of polymerization. At the same time, 20 ppm of trimethylphosphate was continuously added to the obtained polymer from between the transfer pump 8 and the first polycondensation reactor 9. Moreover, the catalyst which was added at the time of the transesterification reaction was used as it was.

After the polymer of increased degree of polymerization was discharged from the outlet 16 of the second polycondensation reactor 13, it was ejected in the shape of a strand from the spinning orifice 19 through the discharge pump 17 and taking-out piping 18. After ejected polymer 20 is cooled and solidified in the air and water-cooled bus 21, it was cut into pellets by pelletizing machine (tip cutter) 22.

The average residence time from leaving the outlet 16 and before ejected from the spinning orifice 19 was 15 minutes. Moreover, the discharge pump 16, taking-out piping 18 and the spinning orifice 19 were altogether heated with a heat medium at 260°C, and the temperature of the inner wall was 255 to 260°C. The average residence time was obtained from the total content volume of the piping and equipment positioned from the outlet 16 to the spinning orifice 19 and the amount of the ejected polymer, and the inner wall temperature was measured with sensors arranged at the positions where heat medium goes in and out as well as main portions of the piping and equipment.

The results are shown in Table 1. The pellets of the obtained composition was excellent in whiteness showing b* value of 6 and L* of 85. Even after they were heated at 180°C in an air atmosphere for 20 hours, the b* value was 12, which showed little coloration. Moreover, there were also low amounts of acrolein and allyl alcohol, and the degree of crystallinity was also within the range of the present invention. Furthermore, the carboxyl end group concentration was as low as 18 with an increase by only 8 meq/kg as compared to a composition sampled at the outlet 16.

After drying the obtained pellets at 130°C under nitrogen atmosphere for 5 hours, molded products in a box form were produced using PS40 E manufactured by Nissei Resin Co., Ltd. as an equipment under the injection molding conditions of a cylinder temperature set at 250°C, a temperature of a metallic mold set at 95°C, an injection time of 17 seconds and a cooling time of 20 seconds. The obtained molded product was uniform in color tone and excellent in whiteness showing a b* value of 8 and L* of 85.

Examples 2 to 6

Polymerization was performed and pellets were obtained in the same manner as in Example 1 except for the conditions shown in Table 1. The results are shown in Table 1. In each example, the product was excellent in color tone, caused little coloration during heating, had low amounts of acrolein and allyl alcohol, and had a degree of crystallinity within the range of the present invention. Moreover, the carboxyl end group concentration was low and showed only a slight increase even as compared to a composition sampled at outlet 16.

Example 7

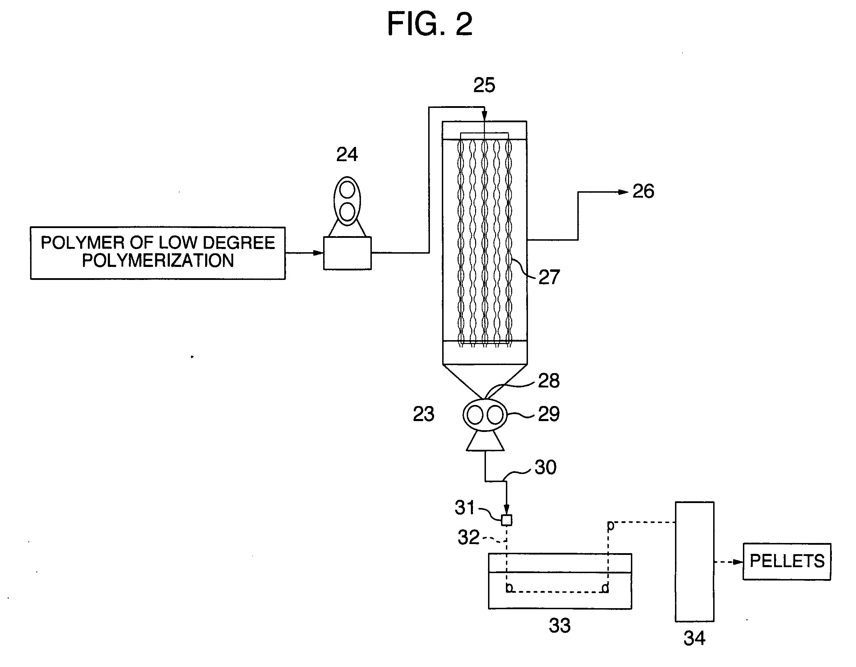

One thousand kilograms per day of PTT polymer was produced using a PTT polymer of low degree of polymerization whose intrinsic viscosity [η] was 0.5 dl/g and carboxyl end group concentration was 10 meq/kg, in a reactor which carries out polymerization by allowing the polymer 27 to flow along the supporting members 27 shown in FIG. 2. The polymerization reaction was carried out by supplying a polymer having a low degree of polymerization from the materials supply port 25 to the polycondensation reactor (the last polymerization reactor) 23 by the transfer pump 24 and allowing it to flow the polymer along the supporting member in an amount of 30g/min per support member in the molten state of 260°C under reduced pressure of 100 Pa, while removing by-product TMG and the like from the vent-port 26. The supporting members used were in the shape of a jungle gym consisting of stainless steel wires with a diameter of 3 mm which were combined at an interval of 50 mm in the vertical direction and at an interval of 30 mm in the horizontal direction. The discharge pump was operated so that polymer might hardly stay on the bottom of the polymerization reactor. The PTT polymer of low degree polymerization used was a polymer to which 0.1 wt%/polymer of titanium tetrabutoxide and 100 ppm/polymer as a weight ratio of the phosphorus element of trimethylphosphate were added.

The thus produced polymer was discharged from the outlet 28 and ejected in the shape of a strand from the spinning orifice 31 through the discharge pump 29 and taking-out piping 30. After ejected polymer 32 is cooled and solidified in the air and water-cooled bus 33, it was cut by pelletizing machine (tip cutter) 34 and formed into pellets. The average residence time from leaving the outlet 28 until ejection from the spinning orifice was 10 minutes. Moreover, the discharge pump 29, taking-out piping 30 and the spinning orifice 31 were altogether heated with a heat medium at 263°C, and the temperature of the inner wall was 255-260°C. The average residence time was obtained from the total content volume of the piping and equipment positioned from leaving the outlet 28 and till leaving the spinning orifice 31 and the amount of the ejected polymer, and the inner wall temperature was measured with sensors arranged at the positions where the heat medium goes in and out as well as main portions of the piping and equipment.

The results are shown in Table 1. The obtained pellets were excellent in color tone and showed little coloration. Moreover, they had low amounts of acrolein and allyl alcohol and a degree of crystallinity within the range of the present invention. Furthermore, the carboxyl end group concentration was low with only a slight increase even as compared to a composition sampled at the outlet 16.

Example 8

Polymerization was performed to obtain pellets in the same manner as in Example 7 except for the conditions shown in Table 1. The results are shown in Table 1. The obtained pellets were excellent in color tone, had little coloration during heating, had low amounts of acrolein and allyl alcohol, and showed a degree of crystallinity within the range of the present invention. Moreover, the carboxyl end group concentration was also low with only a slight increase even as compared to a composition sampled at the outlet 16.

Comparative Examples 1 to 2

Polymerization was performed in the same manner as in Example 1 except for the conditions shown in Table 1. The results are shown in Table 1.

In Comparative Example 1, since the taking-out pipe from the outlet 16 to the spinning orifice 19 was long and thick, the average residence time was too long and the obtained pellets were not only colored to some extent but were also found to have significant coloration when heated at 180°C in the air atmosphere for 20 hours.

In Comparative Example 2, since the temperature of the heat medium for heating the piping and equipment from the outlet 16 to the spinning orifice 19 was high, the inner wall temperature was too high and the obtained pellets were not only colored to some extent but were also found to have significant coloration when heated at 180°C in the air atmosphere for 20 hours.

Table 1

| | Last polymerization | | Piping and equipment | | | Intrinsic viscosity | Acro | Allyl | |
|---|---|---|---|---|---|---|---|---|---|
| | Residence time | Temperature | Residence time | Temperature of heat medium | Inner wall temperature | [η] | Content | Content | |
| | hr | °C | min | °C | °C | dl/g | ppm | ppm | |
| Example 1 | 2 | 260 | 15 | 263 | 255~260 | 0.88 | 7 | 9 | |
| Example 2 | 2 | 260 | 15 | 275 | 263~274 | 0.90 | 12 | 8 | |
| Example 3 | 2 | 260 | 40 | 263 | 255~260 | 0.85 | 15 | 11 | |
| Example 4 | 2 | 260 | 40 | 275 | 263~274 | 0.85 | 18 | 10 | |
| Example 5 | 2.5 | 255 | 15 | 260 | 254~259 | 0.90 | 6 | 8 | |
| Example 6 | 2.8 | 250 | 15 | 250 | 244~249 | 0.80 | 5 | 7 | |
| Example 7 | 1.5 | 260 | 10 | 263 | 255~260 | 1.10 | 2 | 3 | |
| Example 8 | 2 | 260 | 10 | 263 | 255~260 | 1.40 | 5 | 9 | |
| Comparative Example 1 | 2 | 260 | 70 | 263 | 255~260 | 0.80 | 40 | 35 | |
| Comparative Example 2 | 2 | 260 | 70 | 300 | 295~299 | 0.60 | 55 | 35 | |

- Continued -

| Pellets Degree of crystallinity | Color tone | | | | Carboxyl end group concentration | | |
| --- | --- | --- | --- | --- | --- | --- | --- |
| | Pellets | | Pellets after heated | | Outlet | Pellets | Increase |
| % | L*value | b*value | L*value | b*value | meq/kg | meq/kg | meq/kg |
| 3 | 85 | 6 | 86 | 12 | 10 | 18 | 8 |
| 5 | 86 | 8 | 88 | 16 | 10 | 28 | 18 |
| 3 | 86 | 7 | 88 | 18 | 10 | 26 | 16 |
| 5 | 88 | 10 | 88 | 22 | 10 | 35 | 25 |
| 3 | 83 | 5 | 85 | 9 | 8 | 14 | 6 |
| 3 | 87 | 5 | 85 | 9 | 7 | 12 | 5 |
| 2 | 83 | 2 | 85 | 8 | 6 | 13 | 7 |
| 4 | 83 | 5 | 85 | 12 | 10 | 17 | 7 |
| 4 | 85 | 12 | 84 | 28 | 10 | 45 | 35 |
| 8 | 88 | 22 | 80 | 30 | 10 | 75 | 65 |

Allyl: allyl alcohol content (ppm/polymer)

Acro: acrolein content (ppm/polymer)

INDUSTRIAL APPLICABILITY

The PTT composition of the present invention is excellent in color tone even when subjected to a melt forming process, is capable of giving molded products of constantly the same color tone, and also can be produced industrially in a high productivity.

**Claims**

1. A polytrimethylene terephthalate composition comprising polytrimethylene terephthalate, wherein said polytrimethylene terephthalate comprises 50 mol% or more of trimethylene terephthalate repeating units, wherein said composition satisfies the following requirements (A) to (C):

   (A) b* value is -5 to 25, wherein the b* value is obtained after heating at 180°C for 20 hours under an air atmosphere;
   (B) each of acrolein and allyl alcohol in a solution which has said composition dissolved in hexafluoroisopropanol is not more than 20 ppm/composition; and
   (C) degree of crystallinity Xc thereof is 0 to 40%, wherein the degree of crystallinity Xc is represented by

$$Xc = \{\rho c \times (\rho s - \rho a)\}/(\rho s \times (\rho c - \rho a)\} \times 100(\%)$$

   wherein

   $\rho a$:   amorphous density = 1.300 g/cm$^3$
   $\rho c$:   crystal density = 1.431 g/cm$^3$
   $\rho s$:   density of composition (g/cm$^3$).

2. The PTT composition according to Claim 1 wherein said composition has an intrinsic viscosity [η] of 0.4 to 3.0 dl/g.

3. A pellet comprising the composition of Claim 1 or 2.

4. A molded product comprising the composition of Claim 1 or 2 wherein the b* value is -5 to 25.

5. A process for producing a polytrimethylene terephthalate composition comprising continuously polymerizing polytrimethylene terephthalate in a molten state using one or more reactors, wherein an average residence time after the molten polymer leaves the last polymerization reactor and before it is cooled and solidified is 0.01 to 50 minutes, and an inner wall temperature of piping and/or equipment with which the polymer contacts during the residence time is 290°C or less.

6. The process according to Claim 5 wherein the carboxyl end group concentration of the polymer which increases after leaving the last polymerization reactor and before cooling and solidification thereof is in a range of 0 to 30 meq/kg.

# FIG. 1

EP 1 600 467 A1

# FIG. 2

POLYMER OF LOW DEGREE POLYMERIZATION

PELLETS

<div align="center">

**INTERNATIONAL SEARCH REPORT**

</div>

| | International application No. |
|---|---|
| | PCT/JP2004/002615 |

| A. CLASSIFICATION OF SUBJECT MATTER |
|---|
|    Int.Cl$^7$ C08G63/183, C08G63/78, C08L67/02 |

According to International Patent Classification (IPC) or to both national classification and IPC

| B. FIELDS SEARCHED |
|---|

Minimum documentation searched (classification system followed by classification symbols)
   Int.Cl$^7$ C08G63/00–63/91

Documentation searched other than minimum documentation to the extent that such documents are included in the fields searched

| | | | |
|---|---|---|---|
| Jitsuyo Shinan Koho | 1926–2004 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2002-348447 A (Asahi Kasei Corp.), 04 December, 2002 (04.12.02), Column 1, lines 2 to 10; column 5, line 44 to column 6, line 3 (Family: none) | 1–6 |

☐ Further documents are listed in the continuation of Box C.     ☐ See patent family annex.

| | |
|---|---|
| *   Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br>   17 March, 2004 (17.03.04) | Date of mailing of the international search report<br>   30 March, 2004 (30.03.04) |
| Name and mailing address of the ISA/<br>   Japanese Patent Office | Authorized officer |
| Facsimile No. | Telephone No. |

Form PCT/ISA/210 (second sheet) (July 1998)